(19) Europäisches Patentamt / European Patent Office / Office européen des brevets

(11) **EP 2 315 414 A1**

(12) **EUROPEAN PATENT APPLICATION**

(43) Date of publication:
**27.04.2011 Bulletin 2011/17**

(51) Int Cl.:
***H04L 29/08*** (2006.01)

(21) Application number: **09382224.5**

(22) Date of filing: **23.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Telefónica, S.A.**
**28013 Madrid (ES)**

(72) Inventors:
• **Laoutaris, Nikolaos**
**28013, MADRID (ES)**
• **Rodríguez, Rodríguez Pablo**
**28013, MADRID (ES)**

• **Smaragdakis, Georgios**
**28013, MADRID (ES)**
• **Sundaram, Ravi**
**28013, MADRID (ES)**

(74) Representative: **Carpintero Lopez, Francisco et al**
**Herrero & Asociados, S.L.**
**Alcalá 35**
**28014 Madrid (ES)**

Remarks:
A request for correction of the application documents has been filed pursuant to Rule 139 EPC. A decision on the request will be taken during the proceedings before the Examining Division (Guidelines for Examination in the EPO, A-V, 3.).

(54) **A method for transferring tbyte sized delay tolerant bulk data using unutilized but already paid for capacity of commercial internet service providers**

(57) A method for transferring Tbyte sized daily tolerant bulk data using unutilized but already paid for capacity of a commercial ISP, in which a sender sends DTB data to a receiver through a transit link which carries background traffic, the method comprising:
- uploading DUB data, pushing the data through the transit link and downloading the data,
- dividing a period of time corresponding to the already-paid-for capacity into a plurality of equal internal of time;
- computing a free capacity of the transit link in each of said equal intervals, the free capacity being a difference between a charged data volume corresponding to the already-paid-for capacity in said transit link and the volume of background traffic in the transit link;
- uploading and pushing a data portion of the DUB data through the transit link in each interval, the data portion comprising a data volume being lower than the free capacity.

FIG. 2

EP 2 315 414 A1

**Description**

**TECHNICAL FIELD OF THE INVENTION**

The present invention lies in the technical field of data transmission through the Internet and, more particularly, in the field of transmission of Delay Tolerant Bulk data.

**BACKGROUND OF THE INVENTION**

Several important scientific and industrial applications require exchanging Delay Tolerant Bulk (DTB) data. For instance, CERN's Large Hadron Collider (LHC), when fully operational, will produce 27 Tbytes of particle collision data daily that need to be pushed to storage and processing centers in Europe, Asia, and North America. Google and other operators of large data-centers hosting cloud computing applications need to replicate and synchronize raw and processed data across different facilities daily. Rich media need to be transferred across time zones as in the recent Beijing Olympic Games in which large video collections needed to be replicated at US VoD servers by early morning. All of the above mentioned data have delay tolerances that range from several hours (Olympic games) to a few days (LHC), i.e., they are several orders of magnitude greater than the time scales of Internet traffic engineering and congestion avoidance. Depending on the application, DTB data are currently being serviced by either expensive dedicated networks like the LHC Computing Grid, or by the postal system using hard drives and DVDs.

Currently there exist 3 solutions for transferring terabytes of bulk data on a daily basis:

1. With a dedicated network between source and destination. However, it is an expensive proposition to build dedicated networks to move the nearly 27 Tbytes of data everyday from the LHC Computing Grid (http: //lcg.web.cern.ch/LCG/) to storage and processing centers in Europe, Asia and North America.
2. By sending the data in physical form using postal or courier services.
3. By sending the data through commercial ISPs using existing E2E (End-to-end transfer of data between one source and one destination connection) oriented transfers (using ftp or http).

Among the above-mentioned existing solutions, building a new dedicated network for each application (as in LHC) is expensive. Sending data in the form of courier / postal services is cheap for individual shipments but becomes expensive when having to support a continuous flow of data. One should factor in its cost not only the shipment charges but the cost in personnel to operate a supply chain for mounting/ unmounting disks, filling them with data, handing over and receiving them from the courier, etc. A second problem of this solution is delay. Some destinations need at least 2 days to be reached. If one adds an additional "packetization delay" to gather enough data for a shipment, then the end-to-end delay can easily go to 3-4 days.

According to the third existing solution, ISPs dimension their networks based on peak load to handle the hard QoS (quality of service) requirements of interactive traffic. This is reflected in the 95-percentile pricing scheme used by transit ISPs to charge their customers according to (almost) peak demand. Therefore, access ISPs pay according to the few hours of peak load of their typical diurnal variation pattern (Anukool Lakhina, Konstantina Papagiannaki, Mark Crovella, Christophe Diot, Eric D. Kolaczyk, and Nina Taft. Structural analysis of network traffic flows, Proc. of ACM SIGMETRICS / Performance 2004; Matthew Roughan, A. Greenberg, C. R. Kalmanek, Michael Peter Rumsewicz, J. Yates, and Y. Zhang. Experience in measuring internet backbone traffic variability: Models metrics measurements and meaning; Proc. of ITC-18, 2003), in which the load peaks sometime between the afternoon and midnight, then falls sharply, and starts increasing again in the next day.

Diurnal patterns combined with 95-percentile pricing leave large amounts of off-peak transmission capacity that can be used at no additional transit cost. The 95-percentile pricing scheme may be explained as follows: Let x denote a time series containing 5-minute transfer volumes between a customer ISP and a transit provider ISP in the duration of a charging period, typically a month. The customer pays the transit provider an amount given by the charging function $c(.)$ that takes as input the charged volume $q(x)$, defined to be the 95-percentile value of x. Problems are inherent in the third existing solutions as well. Thus, when considering an E2E-CBR policy (i.e. an end-to-end data transfer service that requires a user to determine the bandwidth requirement at connection set-up time so that data may be transferred at a constant rate) of almost constant rate B/T that can deliver volume B within deadline T, in the case of LHC data this would require a stream of at least 2.5 Gbps (27 Tbytes per day). Assuming that the transfer has to reoccur every day, E2E-CBR would push up the 95-percentiles of the sending and receiving access ISPs by exactly B/T =2.5 Gbps costing them anything between $75K and $225K in additional monthly transit costs ($30K-90K per Gbps according to recent prices). In other words, since E2E-CBR is bound to increase the charged volume by exactly its mean rate, it provides no advantage compared to buying dedicated lines of the exact same rate.

Other past proposals like Scavenger service of Qbone [S. Shalunov and B. Teitelbaum. Qbone Scavenger Service (QBSS) Definition, Internet2 technical report, March 2001] tag delay tolerant traffic so that routers can service it with low priority. Its limitation is that while it protects the QoS of interactive traffic, it cannot protect against the high transit costs or meet specific deadlines to accomplish the transfer. Also since it cannot store data inside the network, it cannot accomplish inexpensive data transfers that cross multiple time zones.

## SUMMARY OF THE INVENTION

It is an object of the present invention to solve the problems inherent in the prior art solutions for transferring Tbyte-sized DTB (daily tolerant bulk) data using unutilized but already-paid-for capacity of commercial ISPs. This invention teaches how to send DTB traffic over commercial ISPs that carry mostly residential and corporate TCP traffic i.e., traffic not tolerant to long delays.

The invention refers to a method for transferring Tbyte-sized daily tolerant bulk data using unutilized but already-paid for capacity of commercial ISPs according to claims 1, 8 and 15. Preferred embodiments of the method are defined in the dependent claims.

In a first embodiment of the invention, this object is achieved by a method for transferring Tbyte-sized daily tolerant bulk data using unutilized but already-paid-for capacity of commercial ISPs, in which a sender connected to an upload link having an upload capacity sends daily tolerant bulk data to a receiver connected to a download link having a download capacity through a transit link having a transit capacity, the method comprising uploading daily tolerant bulk data through said upload link, pushing the data through said transit link said link carrying a volume of background traffic and downloading the data through said download link, the method further comprising

- dividing a period of time corresponding to said already-paid-for capacity into a plurality of equal intervals of time;
- computing a free capacity of said transit link in each of said equal intervals, the free capacity being a difference between a charged data volume corresponding to said already-paid-for capacity in said transit link and said volume of background traffic in said transit link;
- uploading and pushing a data portion of said daily tolerant bulk data through said transit link in each interval, said data portion comprising a data volume being lower than said free capacity.

In this first embodiment, said data portion may comprise a guard margin which is deduced from said free capacity to avoid exceeding the charged data volume. Further, said free capacity may be reduced by a protective portion to protect quality of service of said background traffic.

In a second embodiment, that will also be referred to in this specification as *E2E-Sched*, (=End-to-End transfer policy with source scheduling), the above mentioned object is achieved by a method for transferring Tbyte-sized daily tolerant bulk data using unutilized but already-paid-for capacity of commercial ISPs, in which a sender connected to an upload link having an upload capacity of a first access ISP sends daily tolerant bulk data to a receiver connected to a download link having a download capacity of a second access ISP through a transit link having a transit capacity provided by a transit provider, the method comprising uploading daily tolerant bulk data through said first access ISP, pushing the data through a link having a capacity said link carrying a volume of background traffic and downloading the data through the second access ISP, the method further comprising:

- computing a free upload capacity of said upload link in each of said equal intervals, the free upload capacity being a difference between a charged upload data volume corresponding to an already-paid-for upload capacity in said upload link and said volume of background traffic in said upload link;
- computing a free download capacity of said download link in each of said equal intervals, the free download capacity being a difference between a charged data download volume corresponding to an already-paid-for download capacity in said download link and said volume of background traffic in said download link;
- comparing said free upload capacity with said free download capacity in each interval of time and computing a highest free transmission volume in each interval, said highest free transmission volume being the lower of said free upload capacity and said free download capacity in each interval;
- uploading and pushing an upload data portion of said daily tolerant bulk data through said upload link in each interval, said data portion comprising a data volume being lower than said highest free transmission volume.

In accordance with this second embodiment, said upload data portion may comprise a guard margin which is deduced from said highest free transmission volume to avoid exceeding the charged data volume. Further, the highest free transmission volume may be reduced by a protective portion to protect quality of service of said background traffic.

In a third embodiment of the invention, that will also be referred to in this specification as *SnF* (=Store-and-forward policy), the above mentioned object is achieved by a method for transferring Tbyte-sized daily tolerant bulk data using unutilized but already-paid-for capacity of commercial ISPs, in which a sender connected to an upload link having an upload capacity of a first access ISP sends daily tolerant bulk data to a receiver connected to a download link having a download capacity of a second access ISP through a transit service provided by a transit provider the transit service comprising a transit link having a transit capacity and at least one storage node used for storage-and-forward daily tolerant bulk data, the method comprising uploading daily tolerant bulk data through said first access ISP, pushing the data through a link having a capacity said link carrying a volume of background traffic and downloading the data through the second access ISP, the method further comprising:

- computing a free upload capacity of said upload link in each of said equal intervals, the free upload capacity being a difference between a charged upload data volume corresponding to an already-paid-for upload capacity in said upload link and said volume of background traffic in said upload link;
- computing a free download capacity of said download link in each of said equal intervals, the free download capacity being a difference between a charged data download volume corresponding to an already-paid-for download capacity in said download link and said volume of background traffic in said download link;
- computing a buffering capacity of said storage node in said interval of time;
- uploading and pushing an upload data portion of said daily tolerant bulk data through said upload link in each interval into said storage node, said upload data portion having an upload data volume being lower than said buffering capacity and said free upload capacity;
- buffering uploaded data portions in said storage node when said free upload capacity exceeds said free download capacity in an interval of time;
- downloading a download data portion from said storage node through said download link in each interval, said download data portion comprising a download data volume being lower than said free download capacity.

As apparent, in this third embodiment data are sent by making use of a storage node inside a transit ISP. The DTB (Delay tolerant bulk data, here referred to as data that is downloaded by a user but is not consumed for a time that can vary from a several hours to few days. E.g. a high resolution film download) bulk data is stored in such a storage node during its transfer.

According to this third embodiment, said upload data portion or said download data or both, may comprise a respective guard margin which is deduced from said free upload capacity to avoid exceeding the charged upload data volume. Also, the free upload capacity and/or the free download may be reduced by a respective protective portion to protect quality of service of said background traffic.

In each of the herein before described embodiments, the period of time may be 24 hours, whilst each interval of time may have a duration between 1 minute and 10 minutes, for example between 3 minutes and 7 minutes; in a preferred embodiment, according to the current standard, the duration is 5 minutes, but it can change if the transit ISPs change their pricing method. In any case, it can be adapted to the time slot duration chosen by the ISPs.

As readily apparent, this invention teaches how to perform global DTB transfers using the already paid for off-peak capacity in the network. Due to their inherent elasticity to delays, DTB transmissions can be shifted to off-peak hours when interactive traffic is low and thus (1) avoid increasing the transit costs paid at charged links under 95-percentile pricing, and (2) avoid negative impacts on the QoS of interactive traffic.

Advantages of this invention are *inter alia* that:

- The invention allows utilize the ISP network more efficiently than CBR in moving bulk data. Transferring bulk data using CBR is as expensive as a dedicated link.
- In accordance with the second embodiment (*E2E-Sched*) if the DTB data can be sent for free, no transit storage is required. For sender-receiver pairs with up to 5 hours of time- zone difference, *E2E-Sched* almost as efficient (e.g. 70-80%) as the method according to the third embodiment of the invention, *SnF.* Thus, if *SnF* can ship some data for free, it is highly probable that *E2E-Sched* can also ship them for free.
- As the time-zone difference increases, and the two end-points have comparable free capacity, allowing the time-zone difference to impact the end-to-end performance, *SnF* starts having a much higher advantage. It can double the amount of free capacity for pairs with 6 hours difference and triple it at 12 hours. In that case it can easily be that a DTB job is transferred for free by *SnF* but incurs transit costs under *E2E-Sched.* Due to the large gap between the price of transit bandwidth and storage, *SnF* becomes much more economical in this case. Even if the amount of data to be transferred is higher than the amount of data that can be transferred for free), *SnF* incurs the lowest transit cost among other options, *E2E-Sched* and use of a courier service.

## BRIEF DESCRIPTION OF THE DRAWINGS

The foregoing and still other objects and advantages of the present invention will be more apparent from the following detailed explanation of embodiments of the invention in connection with the accompanying drawings herein in which:

Figure 1 is a schematic view of a simple model defining network for transferring DTB data.

Figure 2 is a graph showing an embodiment of the invention according to which DTB data are mixed with background traffic in a 40 Gbps link.

Figure 3 is a graph showing the effect of time-zone difference and dissimilarity index on the ratio F(SnF)/F(E2E-Sched) in an embodiment of the invention.

## MODES OF CARRYING OUT THE INVENTION

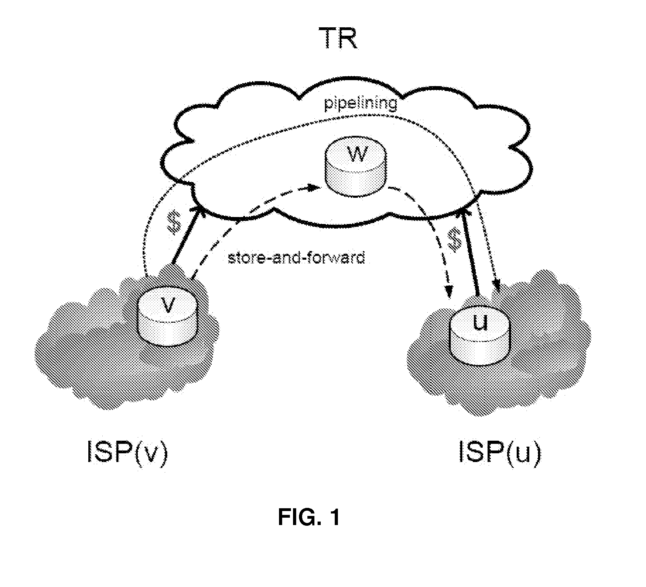

Figure 1 shows a simple model defining a network in which a sender -v- of DTB traffic is connected to an access ISP, -ISP(v)- and a receiver -u- is connected to an access ISP, -ISP(u)-. The two links ISP(v) ↔ TR and TR ↔ ISP(u) are subject to 95% pricing as described above. Transit service for the two access ISPs is provided by a bottleneck-free Transit Provider -TR- used for store-and-forward DTB flows. The Transit Provider -TR- comprises a storage node -w-. Although figure 1 shows one storage node -w- only, several such storage nodes -w- may be used without any loss of generality.

The capacity $C_l$ and the load $x_l$ generated by other clients of the access ISP (also known as background traffic) is known for each link $l$ subject to the 95% charging scheme. The methodology will be discussed in two steps hereon below i.e. first it will be described how DTB traffic may be mixed with background traffic without increasing the charged volume by means of a "water-filling solution", and thereafter it will be described how two embodiments of the invention named *E2E-Sched* and *SnF* scheduling policies, use the "water-filling solution" without adding additional transit cost to the traffic. As readily apparent, the "water-filling solution" by means of which DTB traffic is mixed with background traffic is the backbone of the *E2E-Sched* and *SnF* scheduling policies.

For mixing DTB traffic with the background traffic the volume of DTB traffic that can be pushed through a single link of capacity $C$, carrying background traffic $x$ and in an interval $[t_0, t_0+T)$ without increasing its charged volume $q(x)$ must be computed.

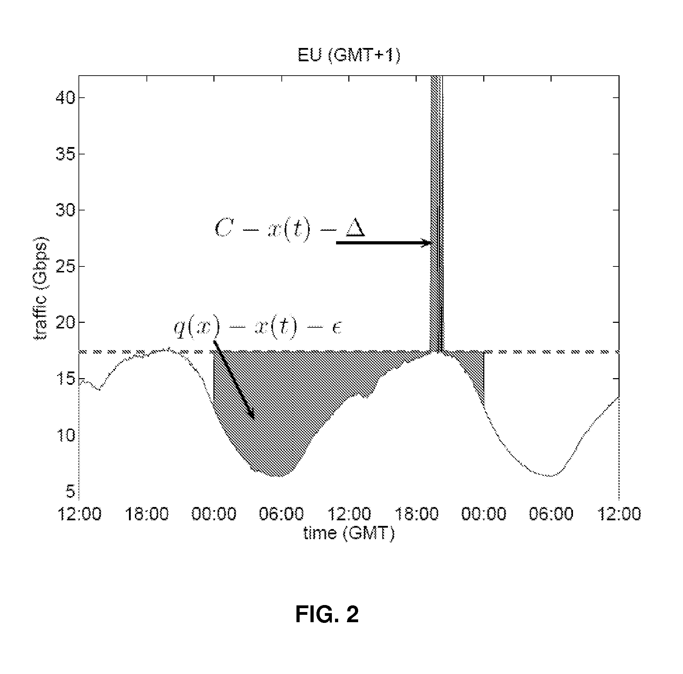

Figure 2 shows the "water-filling solution" on a 40 Gps link. DTB traffic is depicted as fitting between the dashed line (for charged volume $q(x)$) and the solid line (for uplink traffic on the ISP). The gray shaded area is the amount of DTB data. This is filled by a simple "water-filling" strategy. In the embodiment shown, the day is divided in 288 5-minute slots. Therefore, in this embodiment the "water-filling solution" i.e. mixing DTB traffic with existing background traffic is that at time t, $t_0 \le t \le t_0 + 287$, an amount of $f(C,x,t)$ DTB data is scheduled to be sent in a 5-minute slot, according to the formula (I):

$$f(C, x, t) = \begin{cases} q(x) - x(t) & \text{if} \quad x(t) < q(x) \\ \\ C - x(t) & \text{otherwise} \end{cases}$$

wherein

$C$     is the carrying capacity of the access ISP in a 5-minute slot

$x$     is the volume of background traffic of the ISP

$t$     is the current time slot

$q(x)$     is the charged volume in said 5-minute slot

$x(t)$     is the background traffic of the ISP is in said 5-minute slot

A guard margins ε may be deducted to avoid exceeding $q(x)$ due to estimating errors. Also, the injected traffic can be made Δ less than $C-x(t)$ to protect the QoS of the background traffic. In this case, the amount of $f(C,x,t)$ DTB data is scheduled to be sent in a 5-minute slot, according to the formula (IA):

$$f(C, x, t) = \begin{cases} q(x) - z(t) - \varepsilon & \text{if} \quad x(t) < q(x) \\ \\ C - x(t) - \triangle & \text{otherwise} \end{cases}$$

Overall starting at time slot $t_0$ and continuing for T 5-minute slots (T=288 for en entire day), the overall volume of data that can be transmitted for free is computed in accordance with formula (II):

$$F(C, x, t_o, T) = \sum_{t=t_o}^{t_o+T-1} f(C, x, t)$$

wherein *C, x,* and *t* are as defined in formula (I).

As apparent, these additional transmissions come for free since 95 percentile of the background plus the DTB is again q(x). In the graph according to figure 2, both $\triangle$ and $\varepsilon$ are set to zero.

The above described "water-filling solution may be applied to a transfer policy that employs scheduling at the sender to regulate the amount of DTB data sent in each 5-minute slot over an end-to-end connection. This transfer policy will hereinafter be referred to as *E2E-Sched* according to which the volume of DTB traffic that can be pushed through a single link of capacity C, carrying background traffic x and in an interval $[t_0, t_0+T)$ without increasing its charged volume q(x) is also defined as $F(C,x,t_0, T)$ wherein *C, x, $t_0$* and *T* have the meanings as defined above.

In the *E2E-Sched* transfer policy the "water-filling" strategy is used as before to ensure that the 5-minute DTB transmission is respected by both the charged volume of the sender $q(x_v)$ i.e. the charged upload volume and the charged volume of the receiver $q(x_u)$ i.e. the charged download volume. This is necessary because in the current case, the end-to-end DTB flow "pipelines" through both the charged links. The free volume that can be sent end to end by *E2E-sched* starting at $t_o$ and continuing for the next *T* time slots is computed in accordance with formula (IIA):

$$F(E2E - Sched) = \sum_{t=t_0}^{t_t+T-1} \min(f(C_v, x_v, t), f(C_u, x_u, t))$$

wherein

$C_v$ is the carrying capacity of the sender's access ISP in a 5-minute slot
$C_u$ is the carrying capacity of the final receiver's access ISP in a 5-minute slot
$X_v$ is the background traffic of the sender's ISP in said 5-minute slot
$X_u$ is the background traffic of the final receiver's ISP in said 5-minute slot
$t$ is the current time slot
$T$ is the duration of the transfer
$t_o$ is the starting time of the transfer

The above equation implies that the amount of free DTB traffic that can be sent at 95% charging is the sum of minimum free capacity available in the two links in each DTB data transmission interval (5 minutes in the above example).

In another embodiment of the invention, the data are transferred following a store-and-forward policy that will be hereinafter referred to as *SnF* that first uploads data from the sender -v- to the transit storage node -w- in -TR-, and pushes it from node -w- to the final receiver -u-. The transit storage node -w- permits *SnF* to perform independent "water-filling" in the two charged links *ISP(v) → TR and TR → ISP(u),* while respecting the local charged volume in each link.

If the upload from the sender -v- to the final receiver -w- is faster than the download from the transit storage node -w- to the final receiver -u-, the difference between the two rates accumulates at transit storage node -w-. The accumulated data can be drained once free capacity becomes available in the charged download *link TR → ISP(u). F (SnF)* can be computed with a simple iterative solution starting with $F(SnF,t) = 0$. The amount of data delivered to receiver u increases at time t by the free capacity on the downlink or by the free capacity of the uplink, augmented by the additional amount drained from the buffer of the storage node -w- can be computed by means of formula (III):.

$$F(SnF,t) = F(SnF, t-1) + f(t), \qquad t_0 \leq t < T$$

wherein t, to and T have the meaning as defined above and f(t) is defined as follows in formula (IIIA):

$$f(t) = \begin{cases} f(C_u, x_u, t) & \vdots if & f(C_u, x_u, t) < f(C_v, x_v, t) \\ f(C_v, x_v, t) + \min(f(C_u, x_u, t) - f(C_v, x_v, t), b_w(t-1)) & otherwise \end{cases}$$

wherein $C_v$, $C_u$, $x_v$, $x_u$, $t$ and $t_o$ have the meanings as defined in formula (III) and $b_w(t)$ is the buffer occupancy of at the storage node -w- at time t. Again, this can be computed iteratively starting with $b_w(t_0) = 0$, using formula (IIIB):

$$b_w(t) = \begin{cases} b_w(t-1) + f(C_v, x_v, t) - f(C_u, x_u, t) & if & f(C_v, x_v, t) > f(C_u, x_u, t) \\ b_w(t-1) - \min(f(C_u, x_u, t) - f(C_v, x_v, t), b_w(t-1)), & otherwise \end{cases}$$

wherein $C_v$, $C_u$ $x_v$, $x_u$, $t$ and $t_o$ have the meanings as defined above.

The equation for *F(SnF,t)* shows that it has more freedom in transferring data than does *E2E-Sched,* which is constrained by the min operator in the equation for *F(E2E-Sched,t)*. Comparing the equation for *F(E2E-Sched,t)* with the equations of *SnF*, it can be noted that *SnF* has much more freedom compared to *E2E-Sched* since the latter is constrained by a *min(f($C_u$,$x_u$,t), f($C_v$,$x_v$,t))* term that applies to the charged volume and minimum background traffic of both links. Since *SnF* can be uploading from -v- to -w- faster than -w- is pushing to -u-, the difference in the rates accumulates at -w- and can be drained when free capacity becomes available on the downlink to - u-. Overall, it can be observed that the performance gain of store-and-forward over end-to-end scheduling increases with the appearance of non-coinciding off-peak hours, which in turn correlates to high time-zone difference.

However, it has also to be ensured that off-peak capacity in two connecting links does not become a bottleneck independently of the time-zone difference. A dissimilarity index defined to be the ratio between the larger and the smallest off-peak capacity of a pair. Smaller values of index indicate links with comparable off-peak capacity of a pair.

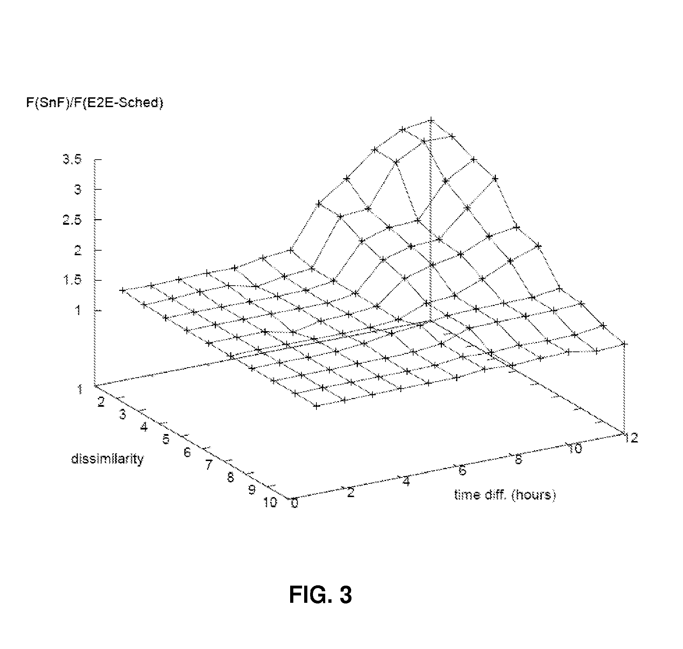

Figure 3 depicts a comparison between the amount of DTB data that can be send by *SnF* and *E2E-Sched* on a large transit ISP TR with PoPs across multiple time zones in America, Europe, and Asia. From figure 3 it becomes apparent that store-and-forward has a performance gain of x 2 and above in sender-receiver pairs of similar capacity and utilization that have at least 5 hours of time zone difference.

In the case where an application requires transmitting in a deadline of time *T*, a volume of traffic B that is greater than what *E2E-Sched* or even *SnF* can deliver for free, both policies will have to transmit with rates that will increase the charged volume of either the uplink or downlink or both.

On a charged link of capacity of *C* and background traffic *x*, the above described "water-filling method" i.e. mixing the charged volume with background traffic, is performed but with a higher charged volume *q > q(x)* given by an extra cost *c(q) - c(q(x))* that a client is willing to pay for transmitting DTB data on top of existing background traffic. The maximum volume *B(q,C,x,$t_0$, T)* that can be shipped under the new non-zero transit cost can be computed similarly to the way we computed the volume that can be transmitted under charged volume *q(x)*.

Using the above idea, the transfer policy P in {*E2E-Sched,SnF*} can be modified to make it able to deliver a volume $B \geq F(P)$ at minimum extra transit cost *C(P,B)* in a deadline *T*. The approach is similar for both policies and comes down to solving the following optimization problem:

(min-cost transfer) Find charged volumes $q_v \geq q(x_v)$ *and* $q_u \geq q(x_u)$ to minimize the

extra transit cost *C(P,B)* =$c_v(q_v) - c_v(q(x_v)) + c_u(q_u) - c_u(q(x_u))$, subject to constraint

$B(P,q_v,q_u) = B.$

$B(P,q_v,q_u)$ denotes the maximum volume of DTB data delivered by policy P to the receiver -u- by $t_0+T$ without exceeding the charged volumes $q_v$, $q_u$. It is computed as follows: For *E2E-Sched,* the computation of *F(E2E-Sched)* as in the above described *E2E-Sched* transfer policy is repeated but substituting $q(x_v)$ and $q(x_u)$ by $q_v$ and $q_u$ respectively. The same substitutions are made to calculate *F(SnF)* as in the store-and-forward policy. The min cost problem can be solved in polynomial time. A faster greedy strategy that assigns $\delta q$ to the link that returns the biggest increase in traffic volume $B(P,q_v,q_u)$ per dollar paid can also be used.

Since it is necessary to estimate $x(t)$ for all $t \, \varepsilon \, [t_0+T]$ before initiating the transfer to perform "water-filling", as prediction of future x(t) using the corresponding value of the same day from last week. It is well understood that on multi-gigabit links, the aggregated volumes are fairly stable across successive days and weeks (Anukool Lakhina, Konstantina Papagiannaki,Mark Crovella, Christophe Diot, Eric D. Kolaczyk, and Nina Taft. Structural Analysis of Network Traffic Flows. In Proceedings of ACM SIGMETRICS / Performance 2004, Matthew Roughan, A. Greenberg, C. R. Kalmanek, Michael Peter Rumsewicz, J. Yates, and Y. Zhang. Experience in Measuring Internet Backbone Traffic Variability: Models Metrics Measurements and Meaning. In Proc. of ITC-18,2003.). In experiments, optimization based on past data produced transmissions with charged volumes that were 1-2% off from the charged volumes if the future traffic were known exactly in $t \, \varepsilon \, [t_0+T)$.

The invention is obviously not limited to the specific embodiments described herein, but also encompasses any variations that may be considered by any person skilled in the art (for example, as regards the choice of components, configuration, etc.), within the general scope of the invention as defined in the appended claims.

**Claims**

1. A method for transferring Tbyte-sized daily tolerant bulk data using unutilized but already-paid-for capacity of a commercial ISP, in which a sender connected to an upload link having an upload capacity sends daily tolerant bulk data to a receiver connected to a download link having a download capacity through a transit link having a transit capacity, the method comprising:

   - uploading daily tolerant bulk data through said upload link, pushing the data through said transit link said link carrying a volume of background traffic and downloading the data through said download link,
   wherein the method further comprises:

      - dividing a period of time corresponding to said already-paid-for capacity into a plurality of equal intervals of time;
      - computing a free capacity of said transit link in each of said equal intervals, the free capacity being a difference between a charged data volume corresponding to said already-paid-for capacity in said transit link and said volume of background traffic in said transit link;
      - uploading and pushing a data portion of said daily tolerant bulk data through said transit link in each interval, said data portion comprising a data volume being lower than said free capacity.

2. A method according to claim 1, wherein said data portion comprises a guard margin which is deduced from said free capacity to avoid exceeding the charged data volume.

3. A method according to claim 1, wherein said free capacity is reduced by a protective portion to protect quality of service of said background traffic.

4. A method according to any of the preceding claims, wherein each interval of time has a duration between 1 minute and 10 minutes.

5. A method according to claim 4, wherein each interval of time has a duration of 5 minutes.

6. A method for transferring Tbyte-sized daily tolerant bulk data using unutilized but already-paid-for capacity of commercial ISPs, in which a sender connected to an upload link having an upload capacity of a first access ISP sends daily tolerant bulk data to a receiver connected to a download link having a download capacity of a second access ISP through a transit link having a transit capacity provided by a transit provider, the method comprising uploading daily tolerant bulk data through said first access ISP, pushing the data through a link having a capacity said link carrying a volume of background traffic and downloading the data through the second access ISP, wherein the method further comprises computing a free upload capacity of said upload link in each of said equal intervals, the free upload capacity being a difference between a charged upload data volume corresponding to an already-paid-for upload capacity in said upload link and said volume of background traffic in said upload link;

computing a free download capacity of said download link in each of said equal intervals, the free download capacity being a difference between a charged data download volume corresponding to an already-paid-for download capacity in said download link and said volume of background traffic in said download link;

comparing said free upload capacity with said free download capacity in each interval of time and computing a highest free transmission volume in each interval, said highest free transmission volume being the lower of said free upload capacity and said free download capacity in each interval;

uploading and pushing an upload data portion of said daily tolerant bulk data through said upload link in each interval, said upload data portion comprising an upload data volume being lower than said highest free transmission volume.

7. A method according to claim 6, wherein said upload data portion comprises a guard margin which is deduced from said highest free transmission volume to avoid exceeding the charged data volume.

8. A method according to claim 6, wherein said highest free transmission volume is reduced by a protective portion to protect quality of service of said background traffic.

9. A method according to claim 6, wherein each interval of time has a duration between 1 minute and 10 minutes.

10. A method according to claim 9, wherein each interval of time has a duration of 5 minutes.

11. A method for transferring Tbyte-sized daily tolerant bulk data using unutilized but already-paid-for capacity of commercial ISPs, in which a sender connected to an upload link having an upload capacity of a first access ISP sends daily tolerant bulk data to a receiver connected to a download link having a download capacity of a second access ISP through a transit service provided by a transit provider the transit service comprising a transit link having a transit capacity and at least one storage node used for storage-and-forward daily tolerant bulk data, the method comprising:

- uploading daily tolerant bulk data through said first access ISP, pushing the data through a link having a capacity said link carrying a volume of background traffic and downloading the data through the second access ISP,

wherein the method further comprises

- computing a free upload capacity of said upload link in each of said equal intervals, the free upload capacity being a difference between a charged upload data volume corresponding to an already-paid-for upload capacity in said upload link and said volume of background traffic in said upload link;

- computing a free download capacity of said download link in each of said equal intervals, the free download capacity being a difference between a charged data download volume corresponding to an already-paid-for download capacity in said download link and said volume of background traffic in said download link;

- computing a buffering capacity of said storage node in said interval of time;

- uploading and pushing an upload data portion of said daily tolerant bulk data through said upload link in each interval into said storage node, said upload data portion having an upload data volume being lower than said buffering capacity and than said free upload capacity;

- buffering uploaded data portions in said storage node when said free upload capacity exceeds said free download capacity in an interval of time;

- downloading a download data portion from said storage node through said download link in each interval, said download data portion comprising a download data volume being lower than said free download capacity.

12. A method according to claim 11, wherein at least one of said upload data portion and said download data portion comprises a respective guard margin which is deduced from said free upload capacity to avoid exceeding the charged upload data volume.

13. A method according to claim 11, wherein at least one of said free upload capacity and said free download is reduced by a respective protective portion to protect quality of service of said background traffic.

14. A method according to claim 11, wherein each interval of time has a duration between 1 minute and 10 minutes.

15. A method according to claim 14, wherein in each interval of time has a duration of 5 minutes.

FIG. 1

**FIG. 2**

F(SnF)/F(E2E-Sched)

FIG. 3

Europäisches
Patentamt

European
Patent Office

Office européen
des brevets

# EUROPEAN SEARCH REPORT

Application Number

EP 09 38 2224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/15394 A1 (SPINWAY INC [US]; LEVOW ZACHARY S [US]; ROBINSON DAN B [US]; GRIFFITH) 1 March 2001 (2001-03-01)<br>* figures 1-6 *<br>* page 3, line 10 - page 5, line 10 *<br>* page 6, line 19 - page 12, line 7 *<br>----- | 1-15 | INV.<br>H04L29/08 |
| X,D | Stanislav Shalunov, Benjamin Teitelbaum: "QBone Scavenger Service (QBSS) Definition"<br>Internet2 Technical Report, Proposed Service Definition<br><br>16 March 2001 (2001-03-16), XP002591849<br>Retrieved from the Internet:<br>URL:http://qos.internet2.edu/wg/wg-documents/qbss-definition.txt<br>[retrieved on 2010-07-13]<br>* the whole document *<br>----- | 1-15 | |
| X | US 2004/062268 A1 (PENDAKUR RAMESH [US] ET AL) 1 April 2004 (2004-04-01)<br>* paragraph [0026] - paragraph [0027] *<br>* paragraph [0034] - paragraph [0035] *<br>* paragraph [0036] - paragraph [0039] *<br>* paragraph [0043] *<br>----- | 1-15 | TECHNICAL FIELDS SEARCHED (IPC)<br><br>H04L |
| X | US 2007/067485 A1 (STOTLAND LEONID [IL] ET AL) 22 March 2007 (2007-03-22)<br>* paragraph [0016] - paragraph [0021] *<br>* paragraph [0036] *<br>* paragraph [0133] - paragraph [0143] *<br>-----<br>-/-- | 1-15 | |

The present search report has been drawn up for all claims

| Place of search | Date of completion of the search | Examiner |
|---|---|---|
| Munich | 14 July 2010 | Buhleier, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 38 2224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FOSTER I ET AL: "End-to-end quality of service for high-end applications" COMPUTER COMMUNICATIONS, ELSEVIER SCIENCE PUBLISHERS BV, AMSTERDAM, NL LNKD-DOI:10.1016/J.COMCOM.2004.02.014, vol. 27, no. 14, 1 September 2004 (2004-09-01), pages 1375-1388, XP004519787 ISSN: 0140-3664 * abstract * * section 5.2.; page 1381 - page 1383 * * figures 4-7 * | 1-15 | |

TECHNICAL FIELDS
SEARCHED      (IPC)

The present search report has been drawn up for all claims

| Place of search | Date of completion of the search | Examiner |
|---|---|---|
| Munich | 14 July 2010 | Buhleier, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 38 2224

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2010

| Patent document cited in search report | | Publication date | Patent family member(s) | | Publication date |
|---|---|---|---|---|---|
| WO 0115394 | A1 | 01-03-2001 | AU | 6942200 A | 19-03-2001 |
| US 2004062268 | A1 | 01-04-2004 | NONE | | |
| US 2007067485 | A1 | 22-03-2007 | NONE | | |

For more details about this annex : see Official Journal of the European Patent Office, No. 12/82